# EUROPÄISCHE PATENTSCHRIFT

(11) **EP 4 237 798 B1**
(45) Veröffentlichungstag und Bekanntmachung des Hinweises auf die Patenterteilung: **22.01.2025**
(21) Anmeldenummer: 21805349.4
(22) Anmeldetag: 28.10.2021
(51) Int. Cl.: G01D 5/48, G01K 11/26, G01L 1/16, G01L 9/00, G01D 3/036

(54) **VERFAHREN ZUM BESTIMMEN DES AUSLESEWERTES EINES SAW-SENSORS**
METHOD FOR DETERMINING THE READOUT VALUE OF A SAW SENSOR
PROCÉDÉ DE DÉTERMINATION DE LA VALEUR DE LECTURE D'UN CAPTEUR SAW

(30) Priorität: 02.11.2020 AT 509382020
(43) Veröffentlichungstag der Anmeldung: 06.09.2023
(73) Patentinhaber: Sensideon GmbH, 4600 Wels (AT)
(72) Erfinder: FACHBERGER, René, 4600 Wels (AT)
(74) Vertreter: Hübscher & Partner Patentanwälte GmbH
(86) Internationale Anmeldenummer: PCT/AT2021/060398
(87) Internationale Veröffentlichungsnummer: WO 2022/087645

(56) Entgegenhaltungen:
- EP-A1- 3 182 084
- DE-A1- 102008 022 125
- US-A- 5 469 369

## Beschreibung

### Technisches Gebiet

Die Erfindung bezieht sich auf ein Verfahren zum Bestimmen des Auslesewertes eines SAW-Sensors, wobei mehrere Auslesesignale gesendet, die zugehörigen Antwortsignale erfasst und ein Antwortsignalmittelwert gebildet wird, und wobei Amplitudenextremwertpositionen der Antwortsignale bestimmt werden.

### Stand der Technik

Zum Bestimmen des Auslesewertes eines SAW-Sensors werden üblicherweise mehrere Auslesesignale gesendet, die den jeweiligen Auslesesignalen zugeordneten Antwortsignale erfasst und aus diesen ein Antwortsignalmittelwert gebildet. Aus diesem Antwortsignalmittelwert werden Amplitudenextremwertpositionen als Auslesewert bestimmt. Diese Mittelwertbildung führt aber bei mehreren SAW-Sensoren mit unterschiedlicher Impulsantwort zu dem Problem, dass die Antwortsignale aller SAW-Sensoren in die Mittelung einfließen, sodass eine zuverlässige Auswertung nicht mehr möglich ist. Dieses Problem wird durch Signalstörungen verstärkt, wie sie insbesondere im Zusammenhang mit schnell gegenüber der Ausleseeinheit bewegten SAW-Sensoren auftreten. EP 3 182 084 A1 zeigt ein bekanntes Verfahren zum Auslesen eines SAW-Sensors.

### Darstellung der Erfindung

Der Erfindung liegt somit die Aufgabe zugrunde, ein Verfahren der eingangs geschilderten Art so auszugestalten, dass eine zuverlässige Bestimmung der Auslesewerte mehrerer schnell gegenüber der Ausleseeinheit bewegten SAW-Sensoren ermöglicht wird.

Die Erfindung löst die gestellte Aufgabe dadurch, dass für jedes Antwortsignal aus wenigstens einer Amplitudenextremwertposition des Antwortsignals als Skalar ein Antwortsignalspositionsvektor gebildet wird, wonach die Antwortsignale jener Antwortsignalspositionsvektoren zu einem Antwortsignalmittelwert gemittelt werden, die im von allen Antwortsignalspositionsvektoren aufgespannten Vektorraum in einem vorgegebenen Abstand zueinander liegen und dass für jeden Antwortsignalmittelwert die ein Auslesewert bestimmt wird.

Als Amplitudenextremwertposition wird dabei der einem lokalen Maximalwert oder einem lokalen Minimalwert der Amplitude auf der Ordinate zugeordnete Positionswert auf der Abszisse verstanden, und zwar grundsätzlich unabhängig davon, ob die Auswertung im Zeit- oder im Frequenzbereich erfolgt. In einer bevorzugten Ausführungsform erfolgt die Auswertung im Zeitbereich und die Amplitudenextremwertposition entspricht der Laufzeit eines Antwortsignalanteils. Wird nun erfindungsgemäß aus wenigstens einer Amplitudenextremwertposition ein Antwortsignalspositionsvektor gebildet, so ergibt sich ein Vektorraum, in dem sich Antwortsignalspositionsvektoren gleicher SAW-Sensoren an bestimmten Positionen häufen. Wählt man nun für die Mittelung nur jene Antwortsignale aus, deren Antwortsignalspositionsvektoren im Bereich einer solchen Häufungsposition liegen, so können auf einfache Weise starke Störungen ausgefiltert und insbesondere die Antwortsignale unterschiedlicher SAW-Sensoren voneinander getrennt werden. Besonders vorteilhafte Auswertungsbedingungen ergeben sich dabei, wenn jene Amplitudenextremwertpositionen für die Bildung der Antwortsignalspositionsvektoren herangezogen werden, die für die einzelnen SAW-Sensoren besonders charakteristisch sind.

Besonders günstige Verarbeitungsbedingungen ergeben sich, wenn für jedes Antwortsignal aus wenigstens zwei Amplitudenextremwertpositionen des Antwortsignals als Skalare ein Antwortsignalspositionsvektor gebildet wird.

Beispielsweise können mehrere zweidimensionale Antwortsignalspositionsvektoren aus je zwei Amplitudenextremwertpositionen des die SAW-Sensoren identifizierenden Adressanteils der Antwortsignale gebildet werden. Dies hat den Vorteil, dass die Häufungspositionen im aufgespannten zweidimensionalen Vektorraum durch bekannte Clusteringverfahren besonders ressourcenschonend und rasch ermittelt werden können.

Nachdem jeder Antwortsignalspositionsvektor einem Antwortsignal zugeordnet ist, spielt es grundsätzlich keine Rolle, über welchen Antwortsignalspositionsvektor ein Antwortsignal einem bestimmten SAW-Sensor zugeordnet wird. Um zufällige Häufungspositionen ohne sinnvollem Informationsinhalt unberücksichtigt zu lassen, können nur die Antwortsignale jener innerhalb eines vorgegebenen Abstands zueinander liegenden Antwortsignalspositionsvektoren zu einem Antwortsignalmittelwert gemittelt werden, deren Anzahl eine vorgegebene Mindestzahl übersteigt. Die Mindestzahl kann beispielsweise bei fünf, vorzugsweise bei zehn liegen.

Für besonders zuverlässige Verarbeitungsbedingungen empfiehlt es sich, wenn die Amplitudenextremwertpositionen die Abszissenwerte lokaler Maxima auf der Ordinate sind.

Um ein besonders vorteilhaftes Verfahren zu ermöglichen, können die Amplitudenextremwertpositionen des Antwortsignalmittelwerts als Auslesewert bestimmt werden.

Beispielsweise können die Auslesesignale in aufeinanderfolgenden Zeitabschnitten unterschiedliche Frequenzanteile aufweisen, wobei die Antwortsignale vor der Ermittlung der Amplitudenextremwertpositionen der Antwortsignale aus dem Frequenzbereich in den Zeitbereich transformiert werden, und wobei die Antwortsignale im Frequenzbereich zu einem Antwortsignalmittelwert gemittelt werden, wonach der Antwortsignalmittelwert in den Zeitbereich transformiert und danach die Amplitudenextremwertpositionen des Antwortsignalmittelwertes im Zeitbereich bestimmt werden. Durch die Mittelung der Antwortsignale im Frequenzbereich und damit in ihrer aufgenommenen, unveränderten Form, können etwaige transformationsbedingte Fehler vermieden und die Qualität des wiederum zurück in den Zeitbereich transformierten Antwortsignalmittelwerts erhöht werden.

Gerade bei gegenüber einer Auswerteeinheit schnell bewegten SAW-Sensoren kann es bei zeitlich gestaffelten Auslesesignalen unterschiedlicher Frequenzen zu Signalstörungen im Zeitbereich kommen, weil der jeweilige SAW-Sensor zum Aussendezeitpunkt eines Auslesesignals bereits so weit aus dem Erfassungsbereich der Ausleseeinheit ausgetreten ist, dass das reflektierte Antwortsignal nicht mehr oder nur noch unvollständig aufgezeichnet werden kann. Um solche fehlerbehafteten Antwortsignale besser ausfiltern zu können, wird vorgeschlagen, dass jedes Antwortsignal in mehrere Positionsbereiche geteilt und für jeden Positionsbereich aus Amplitudenextremwertpositionen wenigstens ein Anwortsignalspositionsvektor gebildet wird. Auf diese Weise beeinflusst eine Störung in einem Positionsbereich nicht möglicherweise ungestörte Antwortsignalanteile in einem anderen Positionsbereich. Obwohl auch hier die Antwortsignale jener Antwortsignalspositonsvektoren zu einem Antwortsignalmittelwert gemittelt werden können, die im von allen Antwortsignalspositionsvektoren aufgespannten Vektorraum in einem vorgegebenen Abstand zueinander liegen, ergeben sich besonders vorteilhafte Auslesebedingungen, wenn nur die Antwortsignalanteile, die den den jeweiligen Antwortsignalspositonsvektoren zugeordneten Positionsbereichen entsprechen, für die Bildung des Antwortsignalmittelwerts herangezogen werden.

### Kurze Beschreibung der Erfindung

In der Zeichnung ist der Erfindungsgegenstand beispielsweise dargestellt. Es zeigen
- Fig. 1: ein Blockdiagramm eines Ablaufschemas eines erfindungsgemäßen Verfahrens,
- Fig. 2: ein Antwortsignal im Zeitbereich und
- Fig. 3: den aus mehreren Antwortsignalpositionsvektoren aufgespannten Vektorraum mit sich ausbildenden Häufungspositionen.

### Wege zur Ausführung der Erfindung

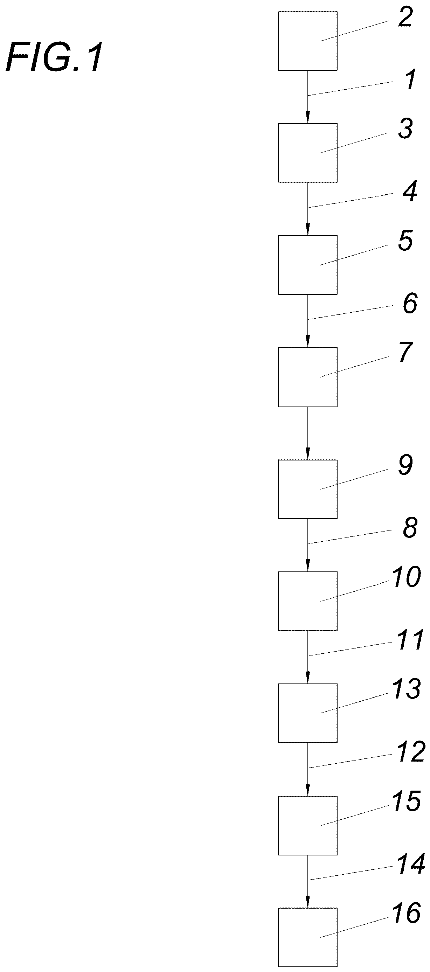

Ein erfindungsgemäßes Verfahren zum Bestimmen des Auslesewertes eines SAW-Sensors umfasst mehrere, in der Fig. 1 in einer ersten Ausführungsform dargestellte Schritte. Zunächst werden Antwortsignale 1 im Frequenzbereich erfasst (Schritt 2) und mithilfe einer inversen Fourier-Transformation in den Zeitbereich rücktransformiert (Schritt 3). Aus dem Antwortsignal 4 im Zeitbereich werden sodann Amplitudenextremwertpositionen ermittelt (Schritt 5) und als Skalare zu einem Antwortsignalspositionsvektor 6 zusammengefasst. In dem von allen Antwortsignalspositionsvektoren 6 aufgespannten Vektorraum werden sodann jene Antwortsignalspositionsvektoren 6 ermittelt (Schritt 7), die in einem vorgegebenen Abstand zueinander liegen. Für diese in einem vorgegebenen Abstand zueinander liegenden Antwortsignalspositionsvektoren 6 wird sodann aus den den Antwortsignalspositionsvektoren 6 zugeordneten Antwortsignalen 1 je ein Antwortsignalmittelwert 8 gebildet (Schritt 9). Diese Antwortsignalmittelwerte 8 werden erneut aus dem Frequenzbereich in den Zeitbereich transformiert (Schritt 10) und für jeden Antwortsignalmittelwert 11 im Zeitbereich die Amplitudenextremwertpositionen 12 im Schritt 13 detektiert, wonach der Auslesewert 14 bestimmt (Schritt 15) und ausgegeben werden kann (Schritt 16).

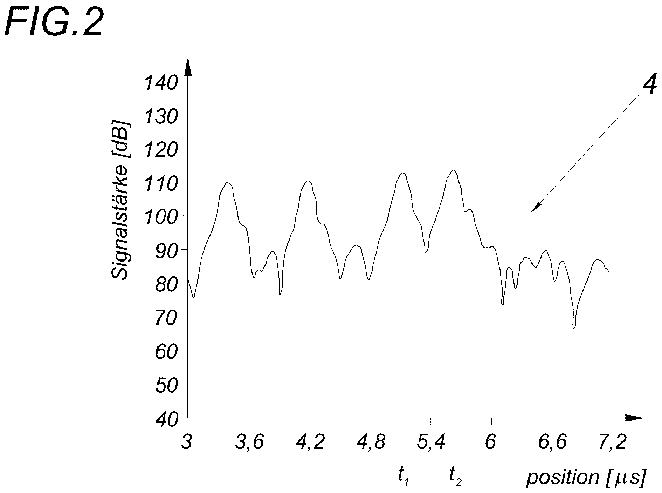

In der Fig. 2 ist ein Antwortsignal 4 im Zeitbereich beispielsweise dargestellt. Das Antwortsignal umfasst vier lokale Maxima an Amplitudenextremwertpositionen, wobei beispielsweise aus zwei Amplitudenextremwertpositionen t1, t2 ein Antwortsignalspositionsvektor gebildet wird.

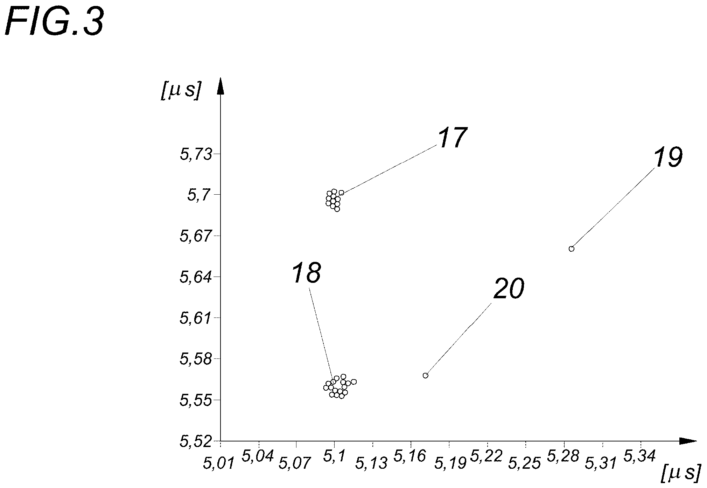

Fig. 3 zeigt den aus den Antwortsignalspositionsvektoren mehrerer Antwortsignale aufgespannten Vektorraum. Dabei ist ersichtlich, dass es zu zwei Häufungspositionen 17, 18 kommt, die zwei SAW-Sensoren entsprechen. Wird nun entsprechend des erfindungsgemäßen Verfahrens für jeden dieser Häufungspositionen 17, 18 ein Antwortsignalmittelwert aus den den an der Häufungsposition liegenden Antwortsignalspositionsvektoren zugeordneten Antwortsignalen gebildet, so können die Antwortsignale beider SAW-Sensoren problemlos voneinander getrennt werden und gleichzeitig stark gestörte Antwortsignale, beispielsweise an den Positionen 19, 20 ausgefiltert werden.

Kommt es durch gleichartige Störungen zu ungewollten Häufungspositionen, so können nur die Antwortsignale jener innerhalb eines vorgegebenen Abstands zueinander liegenden Antwortsignalspositionsvektoren zu einem Antwortsignalmittelwert gemittelt werden, deren Anzahl eine vorgegebene Mindestzahl übersteigt.

Um fehlerbehaftete Antwortsignale besser ausfiltern zu können, wird vorgeschlagen, dass jedes Antwortsignal in mehrere Positionsbereiche geteilt und für jeden Positionsbereich aus Amplitudenextremwertpositionen wenigstens ein Anwortsignalspositionsvektor gebildet wird.

## Patentansprüche

1. Verfahren zum Bestimmen des Auslesewertes eines SAW-Sensors, wobei mehrere Auslesesignale gesendet, die zugehörigen Antwortsignale (1, 4) erfasst und ein Antwortsignalmittelwert (8) gebildet wird, und wobei Amplitudenextremwertpositionen der Antwortsignale (1, 4) bestimmt werden, **dadurch gekennzeichnet, dass** für jedes Antwortsignal (1, 4) aus wenigstens einer Amplitudenextremwertposition des Antwortsignals (1, 4) als Skalar ein Antwortsignalspositionsvektor (6) gebildet wird, wonach die Antwortsignale (1, 4) jener Antwortsignalspositionsvektoren (6) zu einem Antwortsignalmittelwert (8) gemittelt werden, die im von allen Antwortsignalspositionsvektoren (6) aufgespannten Vektorraum in einem vorgegebenen Abstand zueinander liegen und dass für jeden Antwortsignalmittelwert (8) ein Auslesewert (14) bestimmt wird.

2. Verfahren nach Anspruch 1, **dadurch gekennzeichnet, dass** für jedes Antwortsignal (1, 4) aus wenigstens zwei Amplitudenextremwertpositionen des Antwortsignals (1, 4) als Skalare ein Antwortsignalspositionsvektor (6) gebildet wird.

3. Verfahren nach Anspruch 1 oder 2, **dadurch gekennzeichnet, dass** nur die Antwortsignale (1, 4) jener innerhalb eines vorgegebenen Abstands zueinander liegenden Antwortsignalspositionsvektoren (6) zu einem Antwortsignalmittelwert (8) gemittelt werden, deren Anzahl eine vorgegebene Mindestzahl übersteigt.

4. Verfahren nach einem der Ansprüche 1 bis 3, **dadurch gekennzeichnet, dass** die Amplitudenextremwertpositionen die Abszissenwerte lokaler Maxima auf der Ordinate sind.

5. Verfahren nach einem der Ansprüche 1 bis 4, **dadurch gekennzeichnet, dass** die Amplitudenextremwertpositionen (12) des Antwortsignalmittelwerts (8) als Auslesewert (14) bestimmt werden.

6. Verfahren nach einem der Ansprüche 1 bis 5, **dadurch gekennzeichnet, dass** die Auslesesignale in aufeinanderfolgenden Zeitabschnitten unterschiedliche Frequenzanteile aufweisen, dass die Antwortsignale (1) vor der Ermittlung der Amplitudenextremwertpositionen der Antwortsignale (1, 4) aus dem Frequenzbereich in den Zeitbereich transformiert werden, und dass die Antwortsignale (1) im Frequenzbereich zu einem Antwortsignalmittelwert (8) gemittelt werden, wonach der Antwortsignalmittelwert (8) in den Zeitbereich transformiert und danach die Amplitudenextremwertpositionen (12) des Antwortsignalmittelwertes (8) im Zeitbereich bestimmt werden.

7. Verfahren nach einem der Ansprüche 1 bis 6, **dadurch gekennzeichnet, dass** jedes Antwortsignal (1, 4) in mehrere Positionsbereiche geteilt und für jeden Positionsbereich aus Amplitudenextremwertpositionen wenigstens ein Anwortsignalspositionsvektor gebildet wird.

## Claims

1. Method for determining the readout value of a SAW sensor, wherein a plurality of readout signals are transmitted, the associated response signals (1, 4) are detected and a response signal mean value (8) is formed, and wherein amplitude extreme value positions of the response signals (1, 4) are determined, **characterized in that** for each response signal (1, 4) a response signal position vector (6) is formed from at least one amplitude extreme value position of the response signal (1, 4) as a scalar, after which the response signals (1, 4) of those response signal position vectors (6) lying at a predetermined distance from one another in the vector space spanned by all the response signal position vectors (6) are averaged to form a response signal mean value (8), and **in that** a readout value (14) is determined for each response signal mean value (8).

2. Method according to claim 1, **characterized in that** a response signal position vector (6) is formed for each response signal (1, 4) from at least two amplitude extreme value positions of the response signal (1, 4) as scalars.

3. Method according to claim 1 or 2, **characterized in that** only the response signals (1, 4) of those response signal position vectors (6) lying within a predetermined distance from one another and exceeding a predetermined minimum number are averaged to form a response signal mean value (8).

4. Method according to one of claims 1 to 3, **characterized in that** the amplitude extreme value positions are the abscissa values of local maxima on the ordinate.

5. Method according to one of claims 1 to 4, **characterized in that** the amplitude extreme value positions (12) of the response signal mean value (8) are determined as a readout value (14).

6. Method according to one of claims 1 to 5, **characterized in that** the readout signals have different frequency components in successive time intervals, **in that** the response signals (1) are transformed from the frequency domain into the time domain before the amplitude extreme value positions of the response signals (1, 4) are determined, and **in that** the response signals (1) are averaged in the frequency domain to form a response signal mean value (8), after which the response signal mean value (8) is transformed into the time domain and then the amplitude extreme value positions (12) of the response signal mean value (8) are determined in the time domain.

7. Method according to one of claims 1 to 6, **characterized in that** each response signal (1, 4) is divided into a plurality of position ranges and at least one response signal position vector is formed for each position range from amplitude extreme value positions.

## Revendications

1. Procédé pour déterminer la valeur de lecture d'un capteur SAW, selon lequel plusieurs signaux de lecture sont envoyés, les signaux de réponse correspondants (1, 4) enregistrés et une valeur moyenne de signal de réponse établie, et selon lequel des positions de valeurs extrêmes d'amplitude des signaux de réponse (1, 4) sont déterminées, **caractérisé en ce que**, pour chaque signal de réponse (1, 4), un vecteur de position de signal de réponse (6) est établi comme scalaire à partir d'au moins une position de valeur extrême d'amplitude du signal de réponse (1, 4), après quoi, à partir des signaux de réponse (1, 4) de ces vecteurs de position de signal de réponse (6) qui se trouvent à une distance prédéfinie les uns des autres dans l'espace vectoriel déployé par tous les vecteurs de position de signal de réponse (6), est calculée une valeur moyenne de signal de réponse (8), et qu'une valeur de lecture (14) est déterminée pour chaque valeur moyenne de signal de réponse (8).

2. Procédé selon la revendication 1, **caractérisé en ce que**, pour chaque signal de réponse (1, 4), un vecteur de position de signal de réponse (6) est établi comme scalaire à partir d'au moins deux positions de valeurs extrêmes d'amplitude du signal de réponse (1, 4).

3. Procédé selon la revendication 1 ou 2, **caractérisé en ce que** seuls les signaux de réponse (1, 4) des vecteurs de position de signal de réponse (6) se trouvant à une distance maximum prédéfinie les uns des autres, dont le nombre dépasse un nombre minimum prédéfini, donnent lieu au calcul d'une valeur moyenne de signal de réponse (8).

4. Procédé selon une des revendications 1 à 3, **caractérisé en ce que** les positions de valeurs extrêmes d'amplitude sont les valeurs d'abscisse de maxima locaux sur les ordonnées.

5. Procédé selon une des revendications 1 à 4, **caractérisé en ce que** les positions de valeurs extrêmes d'amplitude (12) de la valeur moyenne de signal de réponse (8) sont déterminées comme valeur de lecture (14).

6. Procédé selon une des revendications 1 à 5, **caractérisé en ce que** les signaux de lecture présentent des parts de fréquences différentes dans des tranches temporelles successives, que les signaux de réponse (1) sont transformés de la plage de fréquence dans la plage temporelle avant la détermination des positions de valeurs extrêmes d'amplitude des signaux de réponse (1, 4), et qu'une valeur moyenne de signal de réponse (8) est établie à partir des signaux de réponse (1) sur la plage de fréquence, après quoi la valeur moyenne de signal de réponse (8) est transformée sur la plage temporelle, puis les positions de valeurs extrêmes d'amplitude (12) de la valeur moyenne de signal de réponse (8) sont déterminées sur la plage temporelle.

7. Procédé selon une des revendications 1 à 6, **caractérisé en ce que** chaque signal de réponse (1, 4) est divisé en plusieurs plages de position et que, pour chaque plage de position, au moins un vecteur de position de signal de réponse est établi à partir des positions de valeurs extrêmes d'amplitude.
